# EUROPÄISCHE PATENTSCHRIFT

(11) **EP 2 360 282 B1**
(45) Veröffentlichungstag und Bekanntmachung des Hinweises auf die Patenterteilung: **12.12.2012**
(21) Anmeldenummer: 10006816.2
(22) Anmeldetag: 01.07.2010
(51) Int. Cl.: C21C 5/52, F27B 3/06, F27B 3/19, F27D 3/12, F27D 3/15, C21C 5/46, C21C 5/50

(54) **Elektrolichtbogenofen**
Electric arc furnace
Four à arc électrique

(30) Priorität: 15.02.2010 IN MA03862010
(43) Veröffentlichungstag der Anmeldung: 24.08.2011
(73) Patentinhaber: SMS Siemag Aktiengesellschaft, 40237 Düsseldorf (DE)
(72) Erfinder: Ertl, Markus, 40822 Mettmann (DE); Arora, Atul, Delhi 110051 (IN)
(74) Vertreter: Klüppel, Walter

(56) Entgegenhaltungen:
- EP-A2- 0 385 434
- WO-A1-2004/036131
- DE-A1- 3 308 486

## Beschreibung

Die Erfindung betrifft einen Elektrolichtbogenofen, mit einem Ofenuntergefäß, einem Ofenobergefäß und einem die Elektroden aufnehmenden Ofendeckel, durch den das Ofenobergefäß verschließbar ist, sowie einen horizontal auf Schienen verfahrbaren Rahmen, auf dem das Ofengefäß angeordnet ist.

Bekannt sind sowohl kippbare wie auch nicht kippbare Elektrolichtbogenöfen.

So ist aus der EP 0 049 926 ein kippbarer Lichtbogenofen bekannt, dessen Ofengefäß nach dem Anheben des Ofendeckel mit den Elektroden horizontal aus der Position unterhalb des Ofendeckels verfahrbar ist.

Ebenfalls kippbar aber auch feststehend kann der Elektrolichbogenofen gemäß der WO 031029499 sein, wobei bei diesem Ofen der Abstichkanal in einem separat angebauten Erker vorgesehen ist, wobei der Erker abnehmbar an der Abschlusswand des an sich kreisrunden Ofengefäßes angesetzt ist.

Zum Abstich wird das Ofengefäß gekippt, so dass das flüssige Metall in den Abstichkanal im Erker gelangt.

Bei der nicht kippbaren Variante, wird im Erker ein Druck aufgebaut, so dass das Metall zunächst vom Abstich ferngehalten und dann - bei Öffnung des Abstichs - sofort einfließt. Das Ofenuntergefäß weist an seiner tiefsten Stelle eine Bodenabstichöffnung auf, durch die der Ofen bei Bedarf vollständig entleert werden kann.

Aus der DE 199 19 378 A1 ist ein metallurgisches Gefäß bekannt, mit einer Abstichvorrichtung nach dem Prinzip eines Flüssigkeitsheber oder Syphons.

Diese Konstruktion macht es möglich, dass das Gefäß zum Abstich ebenfalls nicht gekippt werden muss.

Bei Elektrolichtbogenöfen besteht die Notwendigkeit zum Beschicken den Ofendeckel zu entfernen, so dass das Ofeninnere mittels eines Schrottkorbes befüllt werden kann.

Brei dem Elektrolichtbogenofen nach der EP 0 049 926 werden hierzu zunächst die Elektroden durch Anheben aus dem Ofen herausgefahren, so das anschließend der Deckel des Ofens angehoben und zur Seite geschwenkt werden kann.

Hierzu sind entsprechende Hub- und Schwenkeinrichtungen notwendig.

Die bekannten kippbaren oder nicht kippbaren Ofenkonstruktionen sind einschließlich der zugehörigen Aggregate kostspielig und in der Handhabung wie auch der Wartung aufwendig.

Aufgabe der Erfindung ist die Schaffung eines Elektrolichtbogenofens, der einerseits nicht kippbar ist und bei dem andererseits auf ein Ausschwenken und Heben des Ofendeckels, sowie ein Ausschwenken der Elektroden verzichtet werden kann.

Gelöst wird diese Aufgabe mit den Merkmalen des Patentanspruchs 1. Vorzugsweise Ausgestaltungen ergeben sich aus den Unteransprüchen.

Bei dem erfindungsgemäßen Elektrolichtbogenofen ist die wesentliche Änderung der Verzicht auf die Kippbarkeit des Ofens, zum Zwecke des Abschlackens bzw.- des Abstechens des flüssigen Stahls. Anstelle eines Ofenkippsystems kommt nun ein Ofenverfahrsystem zum Einsatz, ohne das die Notwendigkeit besteht, den Ofendeckel zu Heben oder zu Schwenken.

Das Ofenkippsystern entfällt, wie zuvor erwähnt, komplett. Namentlich sind das folgende Komponenten:
- Kipprylinder inklusive Ventilblock
- Kippverriegelung inklusive Kippverriegelungszylinder
- Notkippventil
- Steuerung, Endschalter, Kippwinkelgeber
- Ca- 3 to schwere Stahibtechschweißkonstruktion.

Der gegenwärtig übliche, das Ofengefäßsystem tragende Kipprahmen, verändert sich zu einem translatorisch horizontal verfahrbaren Rahmen, ähnlich eines Pfannentransportwagens. Dieser Rahmen ist symmetrisch und verfügt über zwei Achsen. Im Gegensatz zum Kipprahmen (auch Kippbühne, verzichtet dieser Rahmen auf die schweren Kippwiegen und auf Grund der eingesparten Deckelschwenkbewegung auch auf den aufwendigen Anbau, weicher bislang zur Aufnahme des dazu erforderlichen Großwälzlagers diente. Die daraus resultierende Materialersparnis beläuft sich auf ca. 35-40 to, je nach Ofengröße. Hierbei handelt es sich um schwere arbeitsaufwendige Stahlblechschweißkonstuktion. Zudem können die ebenso aufwendigen mechanischen Bearbeitungen, z-B. für den Lagersitz oder die Kontur der Wiegen eingespart werden.

Die diesen Rahmen abdeckende Bühnenkonstruktion ist nun symmetrisch und wird ebenfalls deutlich kleiner und verzichtet vollständig auf unterstützende Fachwerke

Die vormals erforderlichen Wälzbahnen (mit aufwendigen Wälzbahnverzahnungen, ca. 10 t teure Stahlbramme) werden durch etwa 25 m konturierten Schienenweg ersetzt. Diese Schienen bestehen aus gegossenen Elementen (ADI, GGG)

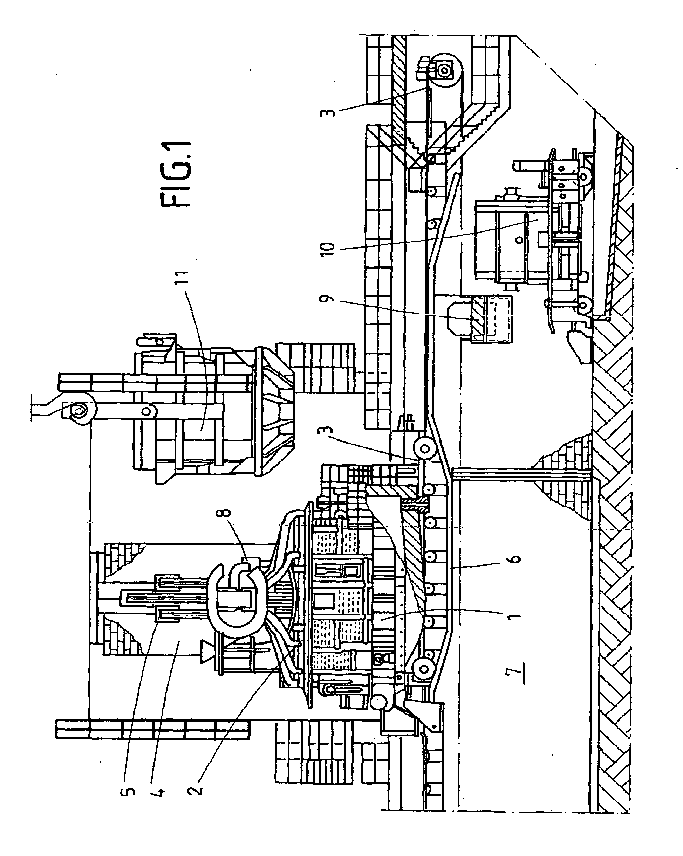

Der sich beim Verfahren des Rahmens abspielende Vorgang wird später mit Bezug auf die Zeichnung beschrieben.

Angetrieben wird der Rahmen beispielsweise über zwei abstichseitige, ortsfeste, elektromotorische Antriebe (ähnlich eines Kranhubwerkes)- Die Antriebe wirken auf je eine Seiltrommel mit einem abrollendem und einem aufrollendem Stahlseilende je nach Fahrrichtung). Die Seilenden sind beiderseitig des Gefäßrahmens, mit der Mittelachse verbunden. Abschlackseitig befinden sich lediglich je eine Umlenkrolle, über welche ggf. auch die Seile vorgespannt werden können. Je nach Drehrichtung der Antriebe wird der Rahmen entweder in die eine oder andere Richtung gezogen, ohne dass die Seilanschlagpunkte vertikal bewegt werden. Die Hubarbeit der bewegten Massen reduziert sich so zu einem Minimum.

Grundsätzlich erfordert diese Technik keinerlei Änderungen am konventionellen und bewährten Obergefäßsystem (Unter- und Obergefäß, Abstichsystem, Ofentür).

Ober- und Untergefäß ändern sich prinzipiell nicht- Lediglich die Kontur des Ofenbodens, d.h, der Steigwinkel des Bodens im Abstichbereich, muss ggf. den realisierbaren und erforderlichen Neigungswinkel angepasst werden.

Durch die erfindungsgemäße Lösung ergit sich gleichzeitig die Möglichkeit auf ein Ausschwenken des Ofendeckelsystems, z.B. zum Zwecke der Befüllung des Ofengefäßes, und damit gleichbedeutend auf ein Ausschwenken des Elektrodentragarmsystems zu verzichten.

Das Schwenkportalsystem, inklusive der Deckeltragwerksarme entfällt daher komplett. Das sind weitere 35 - 40 to schwere und mechanisch bearbeitete Stahlblechschweißkonstruktion. Das Elektrodensäulenführungsgerüst, vormals Teil des Schwenkportals, ist nunmehr aus Stahlbeton gegossen und Teil des Ofenfundamentes bzw. des Tranformatorhauses. Somit entfällt auch die Notwendigkeit einer Wasserkühlung der zuvor genannten Bauteile.

Das Schwenksystem bzw. der Schwenkantrieb entfällt ersatzlos.

Zudem kann der nachbrennkammerseitige Krümmer nun ortsfest gestaltet werden, da keine Ofendeckelschwenkbewegung berücksichtigt werden muss.

Da sich, bedingt durch die Kontur des Schienenweges, das Ofengefäßsystem beim Verfahren in Richtung Abstichposition selbsttätig vom Ofendeckel entfernt bzw. beim Verfahren in Richtung Arbeitsposition selbsttätig auf den Ofendeckel zubewegt, entfällt nicht nur die Notwendigkeit eines Ofendeckelhubwerkes (einschließlich der Deckelhubzylinder, sondern auch eine Platzierung dieser in der näheren Umgebung stromführender Teile, was stets Probleme mit kriechenden Strömen (Induktion) und so genanntem Arcing (Elmsfeuer) bedingte). Weitere Einsparung ergeben sich durch das Entfallen von Wasserkühlung, Isolation und Potentialausgleich in diesem Bereich.

Der Speichenrahmen des Ofendeckels wird nur bezüglich der Anordnung der Speichen geändert, bleibt sonst aber prinzipiell mehr oder weniger unverändert.

Da der Ofendeckel nicht mehr angehoben werden muss entfallen die drei Aufnahmen für die Deckelhubwerke komplett. Stattdessen werden vier von sechs Speichen nach außen parallel zur Ofenquerachse verlängert. Diese Verlängerungen werden links und rechts auf Erweiterungen des Führungsgerüstfundamentes, sowie auf separaten Fundamenten zu beiden Seiten der Nachbrennkammer gelagert. Die Zugänglichkeit zum Ofendeckel kann direkt über eine an das Führungsgerüstfundament angegossene Treppe erfolgen. Die Deckelbühne wird in Form von Gitterrostelementen direkt auf dem Deckel installiert. Dies ist deutlich komfortabler, als die bisher eingesetzte steile Leitertreppe, welche nunmehr ebenfalls entfällt. Ebenso kann auf eine Wasserkühlung in diesem Bereich verzichtet werden.

Der Legierungsstutzen wird auf der Schlackentürseite des Abgaskrümmers angeordnet, somit kann auch das gesamte Legierungssystem ortsfest arrangiert werden. Dies führt zu erheblichen Einsparung.

Die Anbindung an das Kühlwassernetz erfolgt transformatorhausseitig. Hier werden nunmehr vier einfache Kompensatoren anstelle von zwei teueren Rohrdrehgelenken eingesetzt. Lange Schlauchverbindungen großer Nennweiten, von der Transformatorhauswand kommend, entfallen komplett.

Die zuvor genannten Neuerungen und Veränderungen führen zu deutlichen Einsparungen im Bereich Wartung / Instandhaltung.

Die Zugstangen, welche die Elektrodenführungssäulen trugen, entfallen, da diese jetzt in einer Erweiterung des Hydraulikraumes unterhalb der Ofenbühne, auf fest verankerten Lagerböcken stehen. Das heißt die Regulierzylinder hängen nicht mehr frei, sondern stehen geschützt und wartungsfreundlich.

Lange Schlauchleitungen entfallen, da keine Schwenkbewegung mehr berücksichtigt werden muss

Transformatorhaus und Ofenfundamente wachsen mehr zusammen. Die Lastverteilung ins Fundament wird deutlich günstiger, da die Ofenlast nun über vier Räder, anstelle von nur zwei Wiegenaufstandspunkten eingeleitet wird.

Unterhalb der Ofenbühne erstreckt sich der Hydraulikraum bis an die Ofenfundamente. Dies schafft auch zusätzlichen Platz für weitere Räume für z.B. Klimaanlagen und dergleichen.

Insgesamt vereinfacht sich die Situation unterhalb der Ofenbühne erheblich. Auf Grund der dadurch geschaffenen Randbedingungen ist die Umsetzung eines Doghouses einer Ofeneinhausung vereinfacht möglich

Die Kühlwasserversorgung gestaltet sich erheblich günstiger in der Anschaffung und besonders beim Aufwand für Engineering. Es gibt weniger wassergekühlte Bauteile. Dies ergibt auch Einsparungen bei der Wartung.

Unterhalb der Ofenbühne befinden sich keine offenliegenden Rohrleitungen mehr. Sämtliche Rohrleitungen, insbesondere die großer Nennweiten, sind mit dem Kran erreichbar.

Schlauchleitungen, welche bisher das Kippen des Lichtbogenofens ermöglichten, entfallen. Stattdessen werden die Schläuche, welche die translatorische Bewegung des Ofens unterstützen per Energiekette geführt und auf der Ofenbühne gut erreichbar platziert.

Die 13 m langen Schläuche DN300 zum Ofendeckel entfallen, da der Deckel nunmehr ortsfest ist. Stattdessen gibt es zwei oder vier einfache Kompensatoren DN300. Auch auf den Einsatz von Rohrdrehgelenken wird verzichtet.

Die Anzahl an Schläuchen für Kühlwasser, Hydrauliköl, Druckluft u.a. verringert sich deutlich, da es keine Kipp-, Hub- und Schwenkbewegungen mehr gibt. Dem zur Folge entspannt sich die Verrohrungssituation an der Transformatorhauswand erheblich. Ebenso die Platzverhältnisse auf der Ofenbühne im Bereich des Transformatorhauses.

Sämtliche anderen Medien, wie Kohle, Sauerstoff, Stickstoff, Argon usw. können gesammelt ebenfalls per Energiekette zugebracht werden.

Eine verfahrbare Erkerwartungsbühne entfällt komplett. D-h. es sind kein aufwendiger elektromotorischer Kettenantrieb und keine beweglichen Teile in diesem Bereich erforderlich. Die Erkerwartungsbühne ist jetzt Teil des Ofenfundaments (der Ofenbühne) und überspannt die Pfannengrube wie eine Brücke. Diese Brücke- ist von zwei Seiten aus erreichbar und kann deutlich breiter als die bisherige Wartungsbühne ausgeführt werden, was deutlich Vorteile bei der Abstichlochpflege bringt. Die Zugänge zu dieser Wartungsbrücke erfolgen über Abstiege von der Ofenbühne aus. Weitere Vorteile ergeben sich hier hinsichtlich des Abstichtochwechsels. Lochsteinausbrechvorrichtungen (hydraulisch, pneumatisch oder mechanisch), wie häufig von Kunden gewünscht, können problemlos auf diese Wartungsbrücke montiert werden.

Die Elektodenabsetz- und -annippelstände bleiben unverändert.

Die Elektodennachsetzvorrichturyg wird nun im Ofendeckel integriert bzw. auf dem Deckelherztragring platziert. Letzterer wird dazu um eine kreisrunde Schiene (ein Vierkant) auf dessen Oberseite ergänzt. Die Nachsetzvorrichtung besteht aus drei Trägern, welche sternförmig zueinander ausgerichtet sind- Während dieser "Stern" in dessen Ursprung zusammengefügt ist, befinden sich an den drei Außenende Rollen, weiche sich auf der eingangs erwähnten Schiene bewegen. Dieser drehbare Grundrahmen wird gegen die Strahlung durch die heißen Elektroden durch solide Feuerfestabdeckungen geschützt. Weiter trägt jeder dieser Arme einen zentral federgedämpften Feuerfestmonoblock, durchmessergleich mit den Elektroden. Diese Anordnung ist um 60° phasenversetzt zu den Elektroden platziert und kann über einen pneumatischen Antrieb um eben diese 60° gedreht werden. Somit können die Öffnungen im Deckelherz wahlweise geöffnet oder verschlossen werden. Zum Nachsetzen der Elektroden werden diese zunächst in ihre höchste Position gefahren, dann wird die Nachsetzvorrichtung um 60° gedreht bzw. die Deckelherzöffnungen verschlossen. Nun werden die Elektroden nacheinander, bis zum Kontakt mit den Monoblöcken, runtergefahren, die Elektroden gelöst, die Elektrodentragarme entsprechend der jeweiligen Nachsetzlänge angehoben, die Elektroden wieder gefasst und wieder in die höchste Position gefahren. Der Kontakt mit den Monoblöcken kann über die Hydraulik überwacht werden (Druck- und/oder Durchflußüberwachung), so dass die Regulierzylinder gestoppt werden bevor das ganze Gewicht der Elektrodentragarme und der Führungssäulen auf der Nachsetzvorrichtung abgelegt wird bzw. die Federn der Monoblöcke komplett zusammengedrückt werden

Die Hochstromkabel brauchen keine Schwenk- und Kippbewegungen mehr zu kompensieren, werden also nicht mehr tordiert (80 - 90°) und können kürzer ausgeführt werden, als bisher. Dies bedeutet eine wesentliche Verlängerung der Lebensdauer der Kabel. Die Kabel sind somit prinzipiell günstiger.

Aus den zuvor genannten Gründen werden auch die Kosten für Wartung und Instandsetzung niedriger ausfallen.

Ebenfalls kann die Reaktanz auf Grund kürzerer Kabellängen gesenkt werden- Das bedeutet größerer Energieeintrag in den Ofen, weniger Netzrückwirkungen und längere Lichtbögen

Zudem kommt es auf Grund der fehlenden Bewegungen zu deutlich weniger Elektrodenbrüchen /-schäden.

Ebenfalls auf Grund der fehlenden Schwenkbewegung wird der Aufwand für Verrohrung und Verschlauchung an der Transformatorhauswand deutlich geringer ausfallen, Einsparungen im Engineering und in der Beschaffung sind sicher.

Weniger Verrohrung an der Transformatorhauswand macht eine Wartungsbühne, wie sie von Kunden oft gewünscht wird, nun leichter umsetzbar.

Vergleich der zeitlichen Abfolgen zwischen dem neuen und dem herkömmlichen Konzept

| Neues Ofenkonzept | | | |
|---|---|---|---|
| 1. | | | Power on |
| 2. | | | Power off |
| 3. | Die Ofenbewegung wird gestartet. Der Ofentragrahmen neigt sich dabei zum Abschlacken (-5°). Gleichzeitig entfernt sich das Ofengefäß vom Ofendeckel. | | |
| 4. | Nach beendetem Abschlackvprgang neigt sich der Ofen zum Abstechen (+5°). | | |
| 5. | Der Abstich wird eingeleitet. Während des Abstichs wird der erste Schrottkorb zum Chargieren oberhalb des offenen Ofens bereitgestellt. | | |
| 6. | Der Abstich wird durch schnelles zurückfahren des Ofenrahmens, wobei sich das Gefäß selbsttätig um -10° neigt (in -5°- Stellung) gestoppt. | | |
| 7. | | | Das Abstichloch wird gepflegt, der Schieber geschlossen und der Abstichkanal gefüllt. |
| 8. | | | Der erste Schrottkorb wird gesetzt. |
| 9. | | | Der Ofen wird zurück gefahren. |
| 10. | | | Power on |
| 11. | | Power off | |
| 12. | | Das Ofengefäß wird zum Setzen des inzwischen bereitgestellten zweiten | |
| | Schrottkorbs verfahren. | | |
| 13. | | Der zweite Schrottkorb wird gesetzt. | |
| 14. | | Der Ofen wird zurück gefahren. | |
| 15. | | Power on. | |

| Gegenwärtiges Ofenkonzept | | |
|---|---|---|
| 1. | | Power on |
| 2. | | Power off |
| 3. | | Der Ofen wird drei Grad gekippt. |
| 4. | | Der Abstich wird eingeleitet. |
| 5. | | Der Abstich wird durch schnelle Rückkippen gestoppt. |
| 6. | Das Abstichloch wird gepflegt, der Schieber geschlossen und der Abstichkanal gefüllt. | |
| 7. | | Der Ofen wird in horizontale Lage gekippt. |
| 8. | | Der Ofendeckel wird ausgeschwenkt. |
| 9. | | Der erste Schrottkorb wird über dem offenen Gefäß platziert. |
| 10. | Der erste Schrottkorb wird gesetzt. | |
| 11. | Der leere Schrottkorb wird entfernt. | |
| 12. | Der Ofendeckel wird eingeschwenkt. | |
| | 13. Power on | |
| 14. | Power off | |
| 15. | Der Ofendeckel wird ausgeschwenkt. | |
| 16. | Der zweite Schrottkorb wird über dem offenen Gefäß platziert. | |
| 17. | Der zweite Schrottkorb wird gesetzt. | |
| 18. | Der leere Schrottkorb wird entfernt. | |
| 19. | Der Ofendeckel wird eingeschwenkt. | |
| | 20. Power on | |

Auch wenn diese Zusammenstellung nichts über die Verfahrgeschwindigkeit des Ofengefäße-s aussagt, ist direkt klar, dass eine ganze Reihe von Teilprozessen beim neuen Konzept parallel stattfinden können. Dies wird speziell beim Setzen der Schrottkörbe deutlich. Vergleicht man nun die Geschwindigkeiten von Pfannentransportwagen dieser Größenordnung, welche sich durchaus mit 0,4 m pro Sekunde bewegen, d.h. ein Öffnen des Ofens (etwa 9 m) in unter 25 Sekunden bewerkstelligen können, mit den Winkelgeschwindigkeiten beim Deckelschwenken, welche sich in der gleichen Größenordnung bewegen, stellt man fest das ein Lichtbogen mit dem neuen Konzept effizienter betrieben werden kann. D.h., eine Verringerung der Tap-to-Tap Zeiten ist möglich.

Denkbar ist eine, spiegelbildliche Anordnung des Gefäßsystems (inklusive verfahrbarem Rahmen, unabhängig voneinander mit Medien wie z.13- Kühlwasser versorgt). Während in einem System geschmolzen wird kann das andere System abstechen, dessen Abstich gewartet und dessen erste Schrottkorbfüllung gesetzt werden.

Paralleler Betrieb der spiegelbildlichen Ofensystem ist also möglich. Sollte eines der Gefäße neu zugestellt werden müssen kann dieser Parallelbetrieb entsprechend unterbrochen werden ohne negativen Einfluss auf den Betrieb des anderen Gefäßsystems zu haben- Auf einen zeitraubenden Gefäßwechselvorgang (Wechselgefäßtechnik) kann man also zu Gunsten längerer Power-on-Zeiten verzichten. Die Abschlackzone wird groß genug sein, so dass ein Fahrzeug zum Abtransport bzw. Räumen der Schlacke problemlos an beiden Seiten der Nachbrennkammer vorbei die Abschlackgrube erreichen kann

Beide Gefäßsysteme bzw. deren verfahrbare Tragrahmen könnten im Bereich der Schlackentür eine brückenartige Erweiterung, welche zum Beispiel eine Temperatur und Probenahmelanze trägt und Wartungsarbeiten vereinfacht, bekommen.

Angesichts des zusätzlichen enormen Einsparungspotential ist diese Variante eine sinnvolle Ergänzung zum Gesamtkonzept.

Die zuvor beschriebene Variante macht auch den Einsatz von "CONARC-Hauben" (Sauerstoffeinblasung) neben den jeweiligen Abstichposition denkbar. Hier kann man ebenfalls auf kostspielige Schwenkantriebe verzichten. Im Vergleich zum aktuellen CONARC-System kann also auf vier Rollendrehverbindungen (2x Ofendeckel, 1x Sauerstofflanze und 1 x Elektrodentragarme) verzichtet werden.

Die Erfindung soll nachfolgend mit Bezug auf die Zeichnung beschrieben werden, wobei in der Figur die Elektrolichtbogenofenanlage dargestellt ist.

Beschrieben werden allerdings nur die für das Verständnis der Erfindung wesentlichen Teile oder Aggregate.

Mit 1 ist das Ofengefäß in seiner Gesamtheit bezeichnet. Dieses besteht aus einem Ofengefäßunterteil, einem Ofengefäßobertell und dem Ofendeckel 2.

Mit 4 ist das Transformatorhaus mit dem Hydraulikraum bezeichnet.

Mit 5 ist das Elektrodentragarmsystem mit den durch den Ofendeckel 2 hindurchgehenden Elektroden bezeichnet.

Kerngedanke der Erfindung ist die Anordnung des Ofenober- und untergefäßes auf einem Rahmen 3 und dessen horizontale Verfahrbarkeit auf einem Schienenweg 6.

Da der Ofen nicht kippbar ist, andererseits aber für das Abschlacken und den Abstich geneigt werden muss, kommt es entscheidend auf die Ausbildung der Schienenweg 6 an.

Die Kontur des Schienenweges 6 ist so gewählt, dass sich die Mittelachse des Rahmens 3, die man auch als zentrale Neigungsachse bezeichnen kann, zwischen den Radachsen stets auf einem Niveau bewegt (keine vertikalen Wege). D.h., beim Beginn des Verfahrens des Ofens aus der Arbeitsposition senkt sich die abschlackseitige Achse, während die abstichseitige Achse steigt. Das Ofenobergefäß entfernt (senkt) sich dabei automatisch vom Ofendeckel, weshalb auch auf ein Deckelhubwerk verzichtet werden kann. Dieser Vorgang bringt den Ofen zu einer Neigung von -5° (auf die Zeichnung bezogen, nach links), in welcher überschüssige Schlacke ausläuft. In dieser Neigung wird der Ofen weiter horizontal verfahren, bis das Obergefäß nicht mehr vom Ofendeckel überdeckt wird. Die abschlackseitige Achse steigt nun wieder, während sich die abstichseitige Achse ihrerseits senkt. So wird der Ofen zunächst wieder- in die Horizontale gebracht. In dieser Stellung kann, je nach Prozeßschritt, der zweite Schrottkorb gesetzt werden. Weiter senkt sich das Gefäß dann zum Abstechen in +5°( neigt sich nach rechts) ab. In dieser Position wird der Abstich geöffnet und die Stahlschmelze kann in die Pfanne auf dem Pfannenwagen 10 fließen. Der Abstich wird beendet indem man den Ofen nun schnell zurückfährt bis zum Erreichen der -5° Stellung. In dieser Position wird der Sumpf am Ausfließen (Restmenge flüssigen Stahls) gehindert, zudem befindet sich hier die ortsfeste Erkerwartungsbühne 9 direkt unter dem Abstich. Nach erfolgter Abstichlochpflege wird der Abstich wieder geschlossen und an gleicher Stelle der erste Schrottkorb gesetzt. Der Ofen wird anschließend weiter in Richtung Arbeitsposition gebracht, so dass sich das Obergefäß wieder, von unten kommend, an den Ofendeckel 2 schmiegt.

Der Schrottkorb ist mit 11 bezeichnet.

## Patentansprüche

1. Elektrolichtbogenofen, mit einem Ofenuntergefäß, einem Ofenobergefäß und einem die Elektroden aufnehmenden Ofendeckel (2), durch den das Ofenobergefäß verschließbar ist, sowie einem horizontal auf Schienen (6) verfahrbaren Rahmen (3), auf dem das Ofengefäß (1) angeordnet ist,
**dadurch gekennzeichnet,**
**dass** der Ofendeckel (2) mit den zugehörigen Systemkomponenten und das Elektrodentragarmsystem (5) ortsfest angeordnet sind,
**dass** das gesamte Ofengefäß (1), bestehend aus dem Ofenuntergefäß und dem Ofenobergefäß, auf dem Rahmen (3) angeordnet ist und mit diesem aus der Position unter dem Ofendeckel (2) verfahrbar ist, wobei der Schienenweg (6) für den Rahmen (3) so ausgebildet ist, so dass der Ofen beim Verfahren entlang des Schienenweges (6) Neigungen ausführt, die ihn zunächst in eine abschlackseitige Neigung und beim weiteren Verfahren über eine horizontale Position in eine abstichseitige Neigung bringen, wobei sich während der Relativbewegung gegenüber dem Ofendeckel (2) die zentrale Neigungs- oder Mittelachse des Rahmens (3) nur horizontal bewegt.

2. Elektrolichtbogenofen nach Anspruch 1,
**dadurch gekennzeichnet,**
**dass** der Rahmen (3) mindestens an seinen beiden Längsenden eine Radachse mit Rädern aufweist, deren Achsabstand so auf den Schienenweg (6) abgestimmt ist, dass beide Achsen bzw. Radpaare sich bei einer horizontalen Position des Rahmens (3) und damit des Ofengefäßes (1) auf korrespondierenden Schrägbereichen des Schienenweges (6) befinden.

3. Elektrolichtbogenofen nach einem der vorstehenden Ansprüche,
**dadurch gekennzeichnet,**
**dass** der Schienenweg (6) sinusartig ausgebildet ist, mit horizontal verlaufenden Scheitelbereichen.

4. Elektrolichtbogenofen nach einem der vorstehenden Ansprüche,
**dadurch gekennzeichnet,**
**dass** der Schienenweg (6) in dem Bereich, in dem sich das Ofengefäß (1) unterhalb des Ofendeckels (2) befindet, muldenartig ausgebildet ist.

5. Elektrolichtbogenofen nach einem der vorstehenden Ansprüche,
**dadurch gekennzeichnet,**
**dass** der Rahmen (3) mittels eines Seiltriebes verfahrbar ist.

6. Elektrolichtbogenofen nach Anspruch 5,
**dadurch gekennzeichnet,**
**dass** abstichseitig ein elektromotorischer Antrieb mit zwei Seiltrommeln für einen abrollenden und einen aufrollenden Trum vorgesehen sind, wobei die Seilenden beidseitig der Mittelachse am Rahmen (3) befestigt sind und abschlackseitig eine Umlenkrolle für die Rückführung des abschlackseitigen Trum vorgesehen ist.

7. Elektrolichtbogenofen nach einem der vorstehenden Ansprüche,
**dadurch gekennzeichnet,**
**dass** in der Abstichposition des Ofens unterhalb des Schienenweges (6) ein Pfannentransportwagen (10) mit Pfanne positionierbar ist.

## Claims

1. Electric arc furnace, comprise a furnace lower vessel, a furnace upper vessel and a furnace cover (2), which mounts the electrodes and by which the furnace upper vessel is closable, as well as a frame (3), which is movable horizontally on rails (6) and on which the furnace vessel (1) is arranged, **characterised in that** the furnace cover (2) together with the associated system components and the electrode support arm system (5) is arranged in stationary position, that the entire furnace vessel (1), consisting of the furnace lower vessel and the furnace upper vessel, is arranged on the frame (3) and is movable by this from the position below the furnace cover (2), wherein the rail path (6) for the frame (3) is so constructed that the furnace on movement along the rail path (6) executes inclinations which bring it initially into an inclination at a slag removal side and, on further movement beyond a horizontal position, into an inclination at a tapping side, wherein during the movement relative to the furnace cover (2) the central inclination axis or centre axis of the frame (3) moves only horizontally.

2. Electric arc furnace according to claim 1, **characterised in that** the frame (3) has at its two longitudinal ends a wheel axle with wheels, the axle spacing of which is so matched to the rail path (6) that the two axles or wheel pairs in the case of a horizontal position of the frame (3) and thus of the furnace vessel (1) are disposed on corresponding inclination regions of the rail path (6).

3. Electric arc furnace according to one of the preceding claims, **characterised in that** the rail path (6) is of sinusoidal construction with horizontally extending crest regions.

4. Electric arc furnace according to any one of the preceding claims, **characterised in that** the rail path (6) is formed to be trough-like in the region in which the furnace vessel (1) is disposed under the furnace cover (2).

5. Electric arc furnace according to any one of the preceding claims, **characterised in that** the frame (3) is movable by means of a cable drive.

6. Electric arc furnace according to claim 5, **characterised in that** an electric-motor drive with two cable drums for a run to be unreeled and a run to be reeled up is provided at the tapping side, wherein the cable ends are fastened on both sides of the centre axis to the frame (3), and a deflecting roller for return guidance of the run at the slag removal side is provided at the slag removal side.

7. Electric arc furnace according to any one of the preceding claims, **characterised in that** a ladle transport carriage (10) with a ladle is positionable below the rail path (6) in the tapping position of the furnace.

## Revendications

1. Four à arc électrique, comprenant une cuve inférieure de four, une cuve supérieure de four et un couvercle de four (2) dans lequel viennent se loger les électrodes et par lequel la cuve supérieure de four peut être fermée, ainsi qu'un cadre (3) mobile en direction horizontale sur des rails (6), sur lequel est disposée la cuve de four (1), **caractérisé en ce que** le couvercle de four (2) avec les composants correspondants du système et le système de bras de support d'électrode (5) sont montés à demeure, **en ce que** la cuve totale du four (1) constituée par la cuve inférieure de four et la cuve supérieure de four est disposée sur le cadre (3) et peut se déplacer avec ce dernier à partir de la position dans laquelle elle est située en dessous du couvercle de four (2), la voie ferrée (6) pour le cadre (3) étant réalisée de telle sorte que le four, lors de son déplacement le long de la voie ferrée (6), met en oeuvre des inclinaisons qui l'amènent d'abord dans une inclinaison tournée vers le côté décrassage et lors de son déplacement ultérieur en passant par une position horizontale, dans une inclinaison tournée vers le côté coulée, l'axe d'inclinaison central ou l'axe médian du cadre (3) ne se déplaçant qu'à l'horizontale au cours du mouvement relatif par rapport au couvercle de four (2).

2. Four à arc électrique selon la revendication 1, **caractérisé en ce que** le cadre (3) présente, au moins à ses deux extrémités longitudinales, un essieu comportant des roues dont la distance axiale est adaptée à la voie ferrée (6) de telle sorte que les deux axes respectivement les deux paires de roues se trouvent, dans une position horizontale du cadre (3), partant de la cuve de four (1), dans des zones d'inclinaison correspondantes de la voie ferrée (6).

3. Four à arc électrique selon l'une quelconque des revendications précédentes, **caractérisé en ce que** la voie ferrée (6) prend une configuration sinusoïdale, comprenant des zones en forme de raies s'étendant en direction horizontale.

4. Four à arc électrique selon l'une quelconque des revendications précédentes, **caractérisé en ce que** la voie ferrée (6) prend la forme d'une cuvette dans la zone dans laquelle la cuve de four (1) se trouve en dessous du couvercle de four (2).

5. Four à arc électrique selon l'une quelconque des revendications précédentes, **caractérisé en ce que** le cadre (3) peut se déplacer à l'aide d'une transmission par câble.

6. Four à arc électrique selon la revendication 5, **caractérisé en ce qu'**on prévoit, côté coulée, un entraînement par moteur électrique comportant deux tambours à câble pour un brin de déroulement et un brin d'enroulement, les extrémités de câbles étant fixées sur le cadre (3) des deux côtés de l'axe médian et une poulie de renvoi étant prévue côté décrassage pour le renvoi du brin côté décrassage.

7. Four à arc électrique selon l'une quelconque des revendications précédentes, **caractérisé en ce que**, dans la position de coulée du four, un wagon-poche (10) comportant une poche peut venir se placer en dessous de la voie ferrée (6).
